# EUROPÄISCHE PATENTSCHRIFT

(11) **EP 0 639 153 B1**
(45) Veröffentlichungstag und Bekanntmachung des Hinweises auf die Patenterteilung: **24.07.1996**
(21) Anmeldenummer: 93909982.6
(22) Anmeldetag: 13.05.1993
(51) Int. Cl.: B65G 47/66, B65G 69/24, F26B 5/06, A23B 4/037

(54) **TRANSFERTISCH**
TRANSFER TABLE
TABLE DE TRANSFERT

(30) Priorität: 13.05.1992 DE 4215781
(43) Veröffentlichungstag der Anmeldung: 22.02.1995
(73) Patentinhaber: FINN-AQUA SANTASALO-SOHLBERG GmbH, D-50354 Hürth (DE)
(72) Erfinder: HEMMERSBACH, Siegfried, D-5000 Köln 51 (DE); MAY, Heinz, D-5014 Pulheim (DE)
(74) Vertreter: Leineweber, Jürgen, Dipl.-Phys.
(86) Internationale Anmeldenummer: EP9301198
(87) Internationale Veröffentlichungsnummer: WO9323319

(56) Entgegenhaltungen:
- EP-A- 0 391 208
- FR-A- 1 571 566
- FR-A- 2 453 781

## Beschreibung

Die Erfindung bezieht sich auf eine Einrichtung zur Behandlung einer Vielzahl von Behältern, Fläschchen o.dgl. mit den Merkmalen des Oberbegriffs des Patentanspruchs 1.

Bei modernen Gefriertrocknungsanlagen, Sterilisationsanlagen (Autoklaven) usw. besteht die Notwendigkeit, Stellflächen mit einer Vielzahl von Behältern, Fläschchen o.dgl. zu beschicken und diese nach der Durchführung der jeweiligen Behandlung (Gefriertrocknung, Sterilisation usw.) wieder von der Stellfläche zu entfernen. Voraussetzung für einen störungsfreien Übergang der Behälter von der Tischfläche eines Transfertisches auf die Stellflächen - oder umgekehrt - ist es, daß im Übergangsbereich keine Stufen oder Absätze vorhanden sind. Je größer jedoch die Stellflächen sind, desto schwieriger ist es, diese mit exakt gerade verlaufenden Rändern herzustellen. Dieses gilt insbesondere für die Stellflächen von Gefriertrocknungsanlagen, da diese aus mehreren miteinander verschweißten Teilen bestehen und Hohlräume aufweisen, die während des Ablaufs des Gefriertrocknungsverfahrens nacheinander von einem Kühlmittel und einem Heizmittel durchströmt sind. Durch die Herstellung und/oder durch die Temperaturbelastung bedingte Unebenheiten lassen sich deshalb nicht vollständig vermeiden.

Aus der EP-A-391 208 ist ein Transfertisch der eingangs erwähnten Art bekannt. Der schwenkbare Randabschnitt, über den die Verschiebung der Behälter von der Tischfläche des Transfertisches auf eine Stellfläche - oder umgekehrt - erfolgt, soll einen störungsfreien Übergang der Behälter sicherstellen. Dieses Ziel kann jedoch dann nicht erreicht werden, wenn die Vorderkante der Stellfläche nicht gerade verläuft. Trotz schwenkbarem Randabschnitt bilden sich Absätze oder Stufen aus, die zu einem Kippen der Behälter, teilweise mit der Folge der Zerstörung, führen.

Der vorliegenden Erfindung liegt die Aufgabe zugrunde, eine Einrichtung der eingangs erwähnten Art derart weiterzubilden, daß ein störungsfreier Übergang von Behältern von der Tischfläche des Transfertisches auf Stellflächen sichergestellt ist.

Erfindungsgemäß wird diese Aufgabe dadurch gelöst, daß der Randabschnitt des Transfertisches in eine Mehrzahl von Zungen unterteilt ist, die unabhängig voneinander um die sich parallel zum Rand der Tischfläche erstreckende Achse schwenkbar gehaltert sind. Durch diese Maßnahmen kann sich der Rand des Transfertisches wesentlich besser einer nicht gerade verlaufenden Vorderkante einer Stellfläche anpassen, so daß kein nennenswerter Höhenversatz mehr auftritt.

Seit längerer Zeit ist es zwar bei Laderampen für Lastkraftfahrzeuge bekannt, einen schwenkbaren Rand in mehrere Sektionen aufzuteilen (FR-A-15 71 566 und FR-A-24 53 781); Hinweise darauf, bei Transfertischen der hier betroffenen Art zur Erzielung einer störungsfreien Überführung von Fläschchen eine Mehrzahl von Zungen vorzusehen, enthält dieser weit entfernt liegende Stand der Technik jedoch nicht.

Weitere Vorteile und Einzelheiten der Erfindung sollen anhand von in den Figuren 1 bis 6 schematisch dargestellten Ausführungsbeispielen erläutert werden. Es zeigen:
- Figur 1: einen Teilschnitt durch eine Gefriertrocknungseinrichtung mit einem davor befindlichen Transfertisch.
- Figur 2: vergrößert den Übergangsbereich zwischen Transfertisch und Stellfläche nach Figur 1,
- Figur 3: eine Draufsicht auf den Transfertisch sowie
- Figuren 4 bis 6: verschiedene Lösungen von Gestaltungen des Übergangsbereichs.

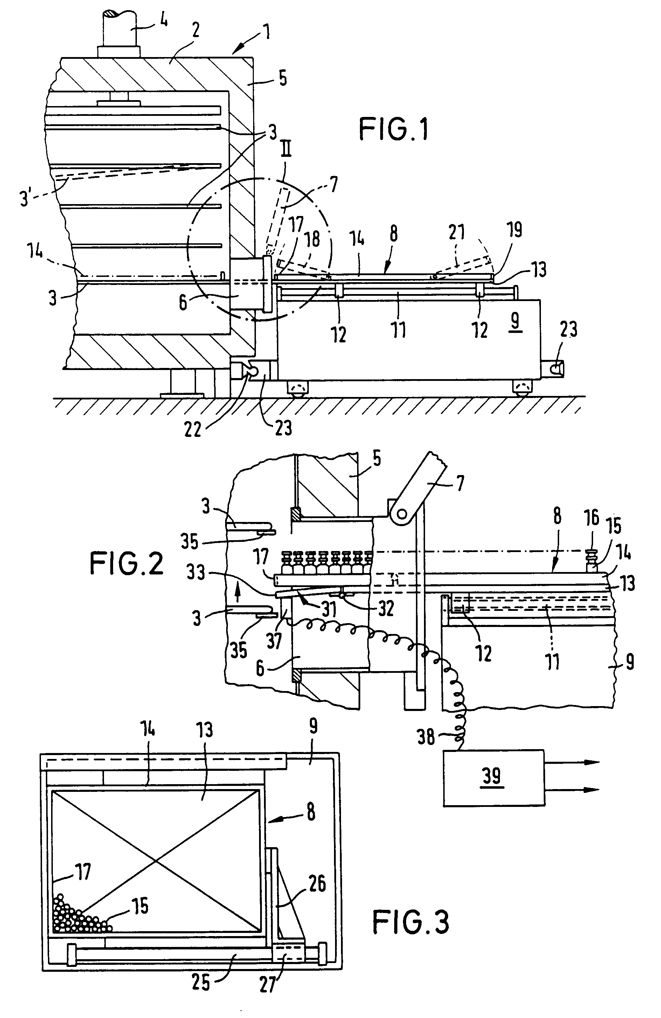

In Figur 1 ist als Beispiel für eine mit Behältern zu beschickende und/oder zu entladende Einrichtung eine Gefriertrocknungseinrichtung dargestellt und mit 1 bezeichnet. Sie umfaßt eine Kammer 2, in der sich die Stellflächen 3 befinden. Mit Hilfe einer im einzelnen nicht näher dargestellten Zylinderkolbeneinrichtung 4 sind die Stellflächen 3 in Bezug auf ihre Höhe einstellbar. Diese Höheneinstellung erlaubt es zum einen, die die einzelnen Stellflächen 3 auf eine bestimmte, Ladehöhe einzustellen. Zum anderen können die Stellflächen mit Hilfe der Zylinderkolbeneinrichtung 4 nach der Durchführung der Gefriertrocknung zusammengeschoben werden, um die Behälter zu schließen.

Eine Wand 5 der Kammer 2 ist mit einer Öffnung 6 ausgerüstet, die mittels der Klappe 7 verschließbar ist. In Höhe der Öffnung 6 befindet sich vor der Gefriertrocknungseinrichtung 1 der Transfertisch 8, der sich auf dem Chargierwagen 9 über die horizontale Spindel 11 und die Spindelmuttern 12 abstützt. Der Transfertisch 8 umfaßt die eigentliche Tischfläche 13 und den Rahmen 14, der seinerseits in im einzelnen nicht näher dargestellter Weise relativ zur Tischfläche 13 über die Stirnseiten des Transfertisches 8 hinaus hin- und her-verschiebbar angeordnet ist (vgl. EP-A-391 208).

In Figur 2 ist der Bereich der Öffnung 6 in der Kammerwand 5 vergrößert dargestellt. Die Spindelführung 11, 12 ist derart ausgebildet, daß der Transfertisch 8 an die zu beschickende Stellfläche 3 derart angefahren werden kann, daß die Oberfläche der jeweiligen Stellflächen 3 und der Tischfläche 13 des Transfertisches 8 eine Ebene bilden. Der Rahmen 14, der die auf dem Transfertisch 8 stehenden Behälter 15 mit den noch lose aufliegenden Stopfen 16 umfaßt, kann über die Stirnseite des Transfertisches 8 hinaus bis in den Innenraum der Gefriertrocknungskammer 1 eingeschoben werden (vgl. Figur 1, in der der eingeschobene Rahmen 14 gestrichelt dargestellt ist). Der in der Position nach Figur 1 der Öffnung 6 in der Kammerwand 5 zugewandte Rand 17 des Rahmens 14 kann mit Hilfe von Seitenarmen 18 angehoben werden (vgl. die jeweils gestrichelten Positionen). Nach dem vollständigen Einfahren des Rahmens 14 in die Kammer 2 erfolgt zunächst das gestrichelt dargestellte Anheben des Rahmenrandes 17 und danach das Zurückziehen des Rahmens 14. Die Behälter 15 bleiben auf der Stellfläche 3 stehen. Danach kann die Beschickung der nächsten Stellfläche eingeleitet werden oder, wenn die letzte Stellfläche gefüllt wurde, das Schließen der Klappe 7 erfolgen und mit dem Gefriertrocknungsprozeß begonnen werden.

Um eine weitere Stellfläche 3 beschicken zu können, wird der Transfertisch erneut mit Behältern 15 gefüllt. Dieses kann dadurch geschehen, daß der Chargierwagen 9 zu einem nicht dargestellten Formatiertisch gerollt wird, der beispielsweise der Öffnung 6 gegenüber angeordnet sein kann. Der Transfertisch 8 wird an den Formatiertisch angefahren. Um mit Hilfe des Rahmens 14 die Flaschen auf dem Formatiertisch umfassen zu können, ist auch der dem Rand 17 gegenüberliegende Rand 19 des Rahmens 14 mit Hilfe von Seitenarmen 21 anhebbar. Mit angehobenem Rand 19 erfolgt die Verschiebung des Rahmens 14. Umfaßt der Rahmen 14 sämtliche Behälter des Formatiertisches, wird der Rand 19 abgesenkt und der Rahmen 14 zurückgezogen, so daß sämtliche Behälter auf den Transfertisch 8 geschoben werden.

Die korrekte Position des Chargierwagens vor der Gefriertrocknungseinrichtung 1 und gegebenenfalls auch vor dem Formatiertisch wird durch Zentrierbolzen 22 und Führungen 23 für diese Bolzen sichergestellt. Es besteht die Möglichkeit, die Höhe des Transfertisches 8 einzustellen, wenn unterschiedlich hohe Stellflächen 3 beladen werden müssen. Der Totraum in der Gefriertrocknungskammer kann dadurch klein gehalten werden. Die Öffnung 6 muß entsprechend groß ausgebildet sein. Weiterhin besteht die Möglichkeit, den Transfertisch 8 zusätzlich drehbar auf dem Chargierwagen 9 abzustützen. Es reicht dann aus, wenn nur einer der Ränder 17, 19 des Rahmens 14 anhebbar ausgebildet ist, da jeweils der anhebbare Rand dem Formatiertisch bzw. der zu beschickenden oder zu entladenden Stellfläche 3 zugewandt werden kann.

Die Bewegung des Rahmens 14 erfolgt ebenfalls mit einer Spindelführung 25, die in Figur 3 dargestellt ist und seitlich neben dem Transfertisch 8 angeordnet ist. Über den Winkel 26, der mit dem Rahmen 14 fest verbunden ist, und die Spindelmutter 27 ist der Rahmen 14 auf der Spindel geführt und dadurch hin- und herverschiebbar. Der Rahmen 14 seinerseits ist mit nicht dargestellten Rollen ausgerüstet. Diese stützen sich auf Rändern des Transfertisches 13 ab, welche damit gleichzeitig Laufschienen für die Rollen bilden.

Für einen störungsfreien Übergang der Behälter 15 vom Transfertisch 8 und von diesem zu den Stellflächen 3 (und umgekehrt) ist es erforderlich, daß die jeweils benachbarten Flächen eine Ebene bilden.Es wurde bereits vorgeschlagen, die Tischfläche 13 des Transfertisches 8 mit einem Randabschnitt 31 auszurüsten, der der jeweils zu be- oder entladenden Tisch- bzw. Stellfläche 3 zugewandt ist und der am Hauptabschnitt der Tischfläche 13 über ein Gelenk 32 derart befestigt ist, daß die Höhe der freien Kante des Abschnittes 31 veränderbar ist. Bei dieser Lösung sind am Abschnitt 31 Anschläge befestigt, die die Position der Oberfläche des Transfertisches 8 definieren. Die Anschläge sind derart seitlich am Abschnitt befestigt, daß sie den Übergang der Behälter nicht stören.

Beim Gegenstand der Erfindung ist der schwenkbare Randabschnitt 31 des Transfertisches in eine Mehrzahl von Zungen 33 unterteilt, die unabhängig voneinander um die sich parallel zum Rand der Tischfläche erstreckende Achse 34 schwenkbar gehaltert sind (vgl. insbesondere Figur 3). Diesen Zungen 33 sind geeignete Anschläge 35 zugeordnet, welche derart ausgebildet und an der Stellfläche 3 angeordnet sind, daß sich die Zungen 33, wenn sie den Anschlägen 35 aufliegen, der Vorderkante der Stellfläche 3 anpassen.

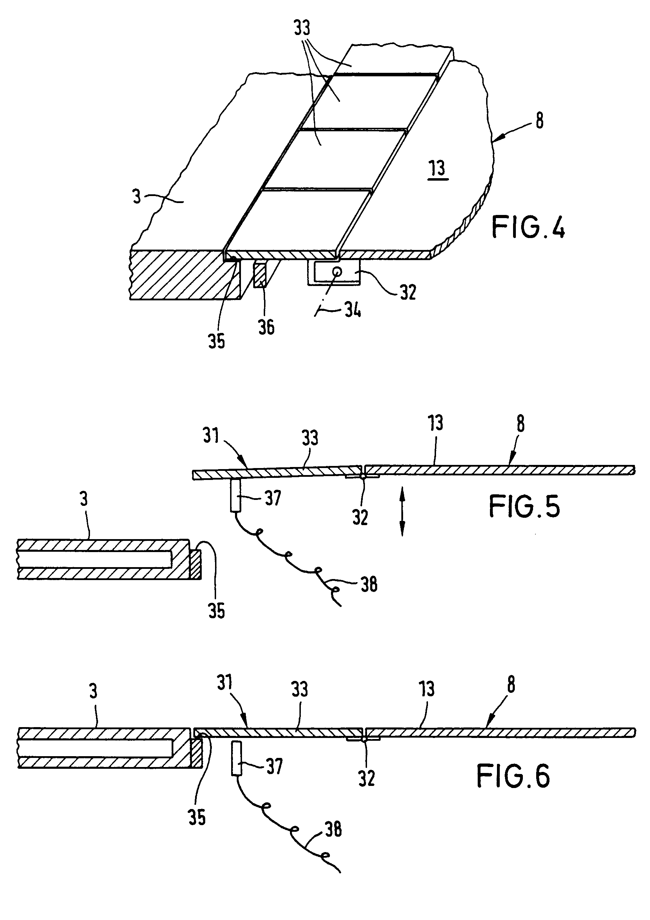

Bei den Ausführungen nach den Figuren 3 bis 5 ist der dem Transfertisch 8 zugewandte Rand (Vorderkante) der Stellfläche mit einer Abstufung 35 als Anschlag ausgerüstet, welche eine der Dicke der Zungen 33 entsprechende Höhe hat. Liegen die Zungen 33 der Abstufung 35 auf (Figuren 3 und 5), dann ist ein im wesentlichen absatzfreier Übergang zwischen der Oberfläche 13 des Transfertisches 8 und der Oberfläche der Stellfläche 3 hergestellt, selbst wenn die Vorderkante der Stellfläche 3 nicht exakt gerade verläuft.

Der Anschlag bzw. die Abstufung 35 wird gebildet durch an den Stellflächen 3 befestigte Metalleisten (Figuren 2 und 4). Es besteht aber auch die Möglichkeit, die Abstufung 35 in die Vorderkanten der Stellflächen 3 einzufräsen (Figur 3).

Das Anfahren des Transfertisches 8 an eine Stellfläche 3 erfolgt in der Weise, daß er zunächst in eine Stellung gebracht wird, in der er sich etwas oberhalb der Stellfläche 3 befindet (Figur 4). Die Zungen 33 liegen in dieser Stellung des Transfertisches 8 einem mit dem Tisch verbundenen, sich unterhalb der Zungen erstreckenden Leiste 36 (Figur 3) auf. Die Neigung der Zungen 33 ist dann immer noch so gering, daß ein Kippen der Behälter nicht zu befürchten ist. Dann wird der Tisch so weit nach unten gefahren, bis die Zungen 33 der Abstufung 35 aufliegen.

Der Steuerung der Abwärtsbewegung kann ein Näherungsschalter 37 (Figuren 2, 4 und 5) dienen, der sich unterhalb einer der Zungen 33 befindet. Dieser Näherungsschalter kann Bestandteil der Auflageleiste 36 (Figur 3) sein. Der Näherungsschalter 37 steht über die Leitung 38 mit dem Steuerblock 39 (Figur 2) in Verbindung. Mit Hilfe dieses Steuerblocks kann die Abwärtsbewegung des Transfertisches 8 oder aber auch die Aufwärtsbewegung der Stellflächen 3 mit Hilfe der Zylinder-Kolben-Einrichtung 4 (Figur 1) gesteuert werden.

## Patentansprüche

1. Einrichtung zur Behandlung einer Vielzahl von Behältern (15), Fläschchen o.dgl.
- mit einer Kammer (1), in der sich mindestens eine Stellfläche (3) für die zu behandelnden Behälter (15) befindet, und
- mit einem der Beschickung und Entladung der Stellfläche (3) dienenden Transfertisch 8, der mit einer Tischfläche (13), mit einem am Transfertisch (8) hin- und herverschiebbar geführten Schieber (14) und mit einem Randabschnitt (31) ausgerüstet ist; der Randabschnitt (31) ist um eine sich parallel zum Rand der Tischfläche (13) erstreckende Achse (34) schwenkbar; über den Randabschnitt (31) erfolgt die Verschiebung der Behälter (15) von der Tischfläche (13) des Transfertisches (8) auf eine Stellfläche (3) oder umgekehrt;
**dadurch gekennzeichnet,**
- daß der Randabschnitt (31) in eine Mehrzahl von Zungen (33) unterteilt ist, die unabhängig voneinander um die Achse (34) schwenkbar gehaltert sind.

2. Einrichtung nach Anspruch 1, dadurch gekennzeichnet, daß den Zungen (33) an den zu beschickenden Stellflächen (3) Anschläge (35) zugeordnet sind.

3. Einrichtung nach Anspruch 2, dadurch gekennzeichnet, daß die Anschläge (35) als Stufe ausgebildet sind, die sich entlang der Vorderkante der zu beschickenden Stellfläche (3) erstreckt und deren Höhe der Dicke der Zungen (33) entspricht.

4. Einrichtung nach Anspruch 3, dadurch gekennzeichnet, daß der Anschlag bzw. die Abstufung (35) in die Stellfläche (3) eingefräst ist.

5. Einrichtung nach einem der vorhergehenden Ansprüche, dadurch gekennzeichnet, daß eine sich unterhalb der Zungen erstreckende, mit dem Transfertisch verbundene Auflageleiste (36) vorgesehen ist, auf die sich die Zungen (33) mit geringer Neigung abstützen, solange sie nicht der Abstufung (35) aufliegen.

6. Einrichtung nach einem der vorhergehenden Ansprüche, dadurch gekennzeichnet, daß mindestens einer der Zungen (33) ein Näherungsschalter (37) zugeordnet ist.

## Claims

1. A device for treating a plurality of containers (15), flasks or the like.
- with a chamber (1), in which at least one support surface (3) is located for the containers (15) to be treated, and
- with a transfer table (8) used for the charging and discharging of the support surface (3), which is equipped with atable surface (13), with a slide (14) that moves back and forth on the transfer table and with a marginal section (31); the marginal section can swing around an axis (34) parallel to the edge of the table surface (13); the containers (15) are moved across the marginal section from the table surface (13) of the transfer table (8) to a support surface (3), or vice-versa;
is characterised in that
- the marginal section (31) is subdivided into a plurality of tongues (33) which can independently swivel around the axis (34).

2. Device according to claim 1 is characterised in that the tongues (33) are allotted corresponding stop faces (35) on the support surfaces (3) to be loaded.

3. Device according to claim 2 is characterised in that the stop faces (35) are designed as steps which run along the front edges of the support surfaces (3) to be loaded and the height of these steps corresponds to the thickness of the tongues (33).

4. Device according to claim 3 is characterised in that the stop face or step (35) is cut into the support surface (3).

5. Device according to one of the previous claims is characterised in that there is a support ledge (36) provided running below the tongues (33) and connected to the transfer table, on which the tongues rest with slight inclination when they are not lying on the step (35).

6. Device according to one of the previous claims, is characterised in that at least one of the tongues (33) is allocated a proximity switch (37).

## Revendications

1. Installation de maniement d'un certain nombre de récipients (15) ou flacons,
- avec une chambre (19, dans laquelle se trouve au moins une étagère (3) pour les flacons à traiter (15) et
- avec une table de transfert 8 qui sert à charger l'étagère (3) équipée d'une surface de table (13), d'une barre (14) pouvant se déplacer et d'une bordure (31); la bordure (31) peut se déplacer autour d'un axe parallèle (34) au rebord de la surface de table (13). Par l'intermédiaire de la bordure (31) les récipients (15) sont déplacés de la surface de table (13) de la table de transfert (8) vers l'étagère (3) ou le contraire;
**caractérisée en ce**,
- que la bordure (31) soit divisée en plusieurs lamelles (33) qui peuvent se déplacer autour de l'axe (34) indépendamment les unes des autres.

2. Installation selon la revendication 1, caractérisée en ce qu'aux lamelles sont adjointes des rainures (35) sur les étagères (3) à remplir.

3. Installation selon la revendication 2, caractérisée en ce que les rainures (35) sont en forme de gradin qui s'étend tout le long de l'arête avant de l'étagère à charger (3) et dont la hauteur correspond à l'épaisseur des lamelles (33).

4. Installation selon la revendication 3, caractérisé en ce que la rainure ou le gradin (35) est fraisé dans l'étagère (3).

5. Installation selon l'une des précédentes revendications, caractérisée en ce qu'une barre d'appui est prévue au-dessous des lamelles et reliée à la table de transtert et sur laquelle les lamelles (33) reposent légèrement inclinées, tant qu'elles ne sont pas sur le gradin (35).

6. Installation selon l'une des précédentes revendications, caractérisée en ce qu'à au moins une lamelle est adjoint un commutateur capacitif (37).
